# EUROPÄISCHE PATENTSCHRIFT

(11) **EP 3 789 237 B1**
(45) Veröffentlichungstag und Bekanntmachung des Hinweises auf die Patenterteilung: **11.05.2022**
(21) Anmeldenummer: 20192276.2
(22) Anmeldetag: 21.08.2020
(51) Int. Cl.: B60N 2/06, B60N 2/14, B60N 2/02

(54) **FAHRZEUGSITZ MIT LÄNGSVERSTELLEINRICHTUNG UND MIT DREHVERSTELLEINRICHTUNG**
VEHICLE SEAT WITH LONGITUDINAL ADJUSTMENT DEVICE AND ROTATION ADJUSTMENT DEVICE
SIÈGE DE VÉHICULE POURVU DE DISPOSITIF DE RÉGLAGE DE LA LONGUEUR ET DE DISPOSITIF DE RÉGLAGE ROTATIF

(30) Priorität: 06.09.2019 DE 102019123960
(43) Veröffentlichungstag der Anmeldung: 10.03.2021
(73) Patentinhaber: GRAMMER AG, 92289 Ursensollen (DE)
(72) Erfinder: HALLER, Erwin, 92262 Birgland (DE)
(74) Vertreter: Hannke, Christian

(56) Entgegenhaltungen:
- WO-A1-2015/066683
- DE-A1-102017 206 941
- DE-U1-202017 105 193
- US-A- 4 351 562
- US-B1- 7 036 883

## Beschreibung

Die Erfindung betrifft einen Fahrzeugsitz mit einem Unterteil zum Anordnen an einem Karosserieteil eines Nutzfahrzeugs und einem Oberteil zum Lagern eines Sitzteils, wobei der Fahrzeugsitz eine Längsverstelleinrichtung, mittels welcher das Oberteil gegenüber dem Unterteil in Längsrichtung und/oder Breitenrichtung des Fahrzeugsitzes verschiebbar ist, sowie eine von der Längsverstelleinrichtung unabhängig arbeitende Drehverstelleinrichtung, mittels welcher zumindest Teile des Oberteils gegenüber dem Unterteil um eine Achse in Höhenrichtung des Fahrzeugsitzes rotierbar sind, aufweist, gemäß dem Oberbegriff des Anspruchs 1. Gattungsgemäße Fahrzeugsitze mit Längsverstelleinrichtungen und Drehverstelleinrichtungen sind aus dem Stand der Technik bereits bekannt.

Beispielsweise werden hier zunächst Arretierungsvorrichtungen der Längsverstelleinrichtungen und/oder Drehverstelleinrichtungen manuell gelöst, woraufhin eine Längsverstellung und/oder eine Rotation des Oberteils durch eine vom Insassen des Fahrzeugsitzes initiierte Bewegung stattfinden kann. Allerdings werden derartige Einrichtungen in Höhenrichtung des Fahrzeugsitzes häufig übereinander angeordnet; somit ist der Platzbedarf für die gleichzeitige Anordnung von Längsverstelleinrichtungen und Drehverstelleinrichtungen zumindest in Höhenrichtung des Fahrzeugsitzes oft hoch.

Außerdem wird es seitens des Fahrers manchmal als mühsam empfunden, mit eigener Kraft den Sitz zu verstellen. Zudem ist eine genaue manuelle Verstellung nur schwer möglich. Dokument DE 10 2017 206 941 A1 zeigt beispielsweise eine Sitzverstellvorrichtung für einen Fahrzeugsitz mit einer ersten Dreheinrichtung, einer zweiten Dreheinrichtung und einer senkrecht zu den parallelen Drehachsen laufenden Linearführung, wobei die jeweilige Sitzverstellung durch Elektromotoren angetrieben werden. Die erste Dreheinrichtung ist dabei vorgesehen, um die Richtung der Linearführung zu ändern, wohingegen die zweite Dreheinrichtung zur Drehung des Sitzes auf der Linearführung beweglich ist.

Dokument US 4 351 562 A zeigt einen beweglichen Sitz für einen motorisierten Rollstuhl, wobei der Sitz einerseits elektrisch angetrieben in seiner Höhe, die mit einer Längsverschiebung gekoppelt ist, mittels einem Gestänge und einem Spindelantrieb verstellt werden kann, sowie andererseits mittels einer Drehtellereinheit und einem bandförmigen Kraftübertragungsmittel elektrisch gedreht werden kann.

Demnach sind elektrische Antriebe als Teil von Längsverstelleinrichtungen und Drehverstelleinrichtungen bereits bekannt. Diese weisen jedoch oft ebenfalls einen großen Platzbedarf auf und sind oft platzraubend innerhalb des Fahrzeugsitzes angeordnet.

Es ist daher Aufgabe der vorliegenden Erfindung, einen Fahrzeugsitz mit einer Längsverstelleinrichtung und einer Drehverstelleinrichtung zu entwickeln, welcher eine kompakte Bauweise und eine hohe Genauigkeit hinsichtlich der erforderlichen Verstellung aufweist.

Die Aufgabe der Erfindung wird gelöst von einem Fahrzeugsitz mit einem Unterteil zum Anordnen an einem Karosserieteil eines Nutzfahrzeugs und einem Oberteil zum Lagern eines Sitzteils, wobei der Fahrzeugsitz eine Längsverstelleinrichtung, mittels welcher das Oberteil gegenüber dem Unterteil in Längsrichtung und/oder Breitenrichtung des Fahrzeugsitzes verschiebbar ist, sowie eine von der Längsverstelleinrichtung unabhängig arbeitende Drehverstelleinrichtung, mittels welcher zumindest Teile des Oberteils gegenüber dem Unterteil um eine Achse in Höhenrichtung des Fahrzeugsitzes rotierbar sind, aufweist. Erfindungsgemäß ist eine virtuelle Ebene bereitgestellt, welche parallel zu einer Längsrichtung und einer Breitenrichtung des Fahrzeugsitzes sowie die Längsverstelleinrichtung und die Drehverstelleinrichtung schneidend angeordnet ist, wobei die Längsverstelleinrichtung und die Drehverstelleinrichtung elektrisch angetrieben ausgestaltet sind.

Die Längsverstelleinrichtung und die Drehverstelleinrichtung sind also in Höhenrichtung des Fahrzeugsitzes zumindest teilweise überlappend angeordnet. Dies reduziert den erforderlichen Bauraum enorm. Außerdem sind beide Einrichtungen elektrisch angetrieben, was den Kraftaufwand für den Sitzinsassen eliminiert und die Genauigkeit der gewünschten Verstellung erhöht.

Bevorzugt sind die Längsverstelleinrichtung und/oder die Drehverstelleinrichtung selbsthemmend ausgestaltet. Dies lässt sich über den elektrischen Antrieb einfach realisieren.

Bevorzugt umfasst der Fahrzeugsitz eine Vertikalfederungseinrichtung, mittels welcher das Sitzteil federnd gelagert ist. Bevorzugt sind die Längsverstelleinrichtung und die Drehverstelleinrichtung unterhalb der Vertikalfederungseinrichtung oder oberhalb der Vertikalfederungseinrichtung angeordnet. Beispielsweise sind die Längsverstelleinrichtung und die Drehverstelleinrichtung zwischen der Vertikalfederungseinrichtung und dem Sitzteil angeordnet.

Die Aktivierung der Längsverstelleinrichtung und/oder der Drehverstelleinrichtung kann manuell erfolgen, beispielsweise über das Betätigen eines Auslöseelements (Bedienknopf) an einer Bedieneinrichtung durch den Fahrer. Daneben ist es möglich, dass die Aktivierung der Längsverstelleinrichtung und/oder der Drehverstelleinrichtung automatisch erfolgt. Hierzu ist es denkbar, dass ein Steuerungssystem des Fahrzeugs in der Lage ist, eine Fahrererkennung durchzuführen und anschließend die bevorzugten Einstellungen hinsichtlich Längsverstellung und/oder Drehverstellung des erkannten Fahrers vornimmt ("Memoryfunktion"). Beispielsweise erfolgt die Erkennung bei der Aktivierung des Fahrzeugs über die Erkennung des einem bestimmten Fahrer zuordenbaren Schlüssels. Alternativ ist es möglich, dass der Fahrer sich selbst gegenüber dem Fahrzeug zu erkennen gibt; so kann er als "Fahrer 1" beispielsweise eine bestimmte Taste drücken oder innerhalb eines Menüs seinen Namen ("Fahrer 1") auswählen.

Dabei arbeiten die Längsverstelleinrichtung und die Drehverstelleinrichtung mechanisch und elektrisch unabhängig voneinander. Dennoch sind sie bevorzugt zeitgleich, mithin simultan aktivierbar und/oder deaktivierbar.

Um den Platzbedarf weiter zu reduzieren, ist es bevorzugt, wenn eine erste Höhenausdehnung der Längsverstelleinrichtung in Höhenrichtung des Fahrzeugsitzes eine erste obere Grenze und eine erste untere Grenze aufweist, wobei eine zweite Höhenausdehnung der Drehverstelleinrichtung oder von Teilen der Drehverstelleinrichtung in Höhenrichtung des Fahrzeugsitzes eine zweite obere Grenze und eine zweite untere Grenze aufweist, wobei, jeweils in Höhenrichtung des Fahrzeugsitzes betrachtet, die erste obere Grenze gleichauf mit oder oberhalb von der zweiten oberen Grenze und/oder die erste untere Grenze gleichauf mit oder unterhalb von der zweiten unteren Grenze angeordnet ist.

Die Drehverstelleinrichtung ist also bevorzugt teilweise oder vollständig zwischen den beiden Grenzen der Längsverstelleinrichtung in Höhenrichtung angeordnet.

Bevorzugt ist die erste obere Grenze und/oder die erste untere Grenze mittels eines weiter unten noch genauer beschriebenen ersten Elektromotors ausgestaltet.

Ferner ist es bevorzugt, wenn eine erste Längsausdehnung der Längsverstelleinrichtung in Längsrichtung des Fahrzeugsitzes eine erste vordere Grenze und eine erste hintere Grenze aufweist, wobei eine zweite Längsausdehnung der Drehverstelleinrichtung oder von Teilen der Drehverstelleinrichtung in Längsrichtung des Fahrzeugsitzes eine zweite vordere Grenze und eine zweite hintere Grenze aufweist, wobei, jeweils in Längsrichtung des Fahrzeugsitzes betrachtet, die erste vordere Grenze gleichauf mit oder vor der zweiten vorderen Grenze und/oder die erste hintere Grenze gleichauf mit oder hinter der zweiten hinteren Grenze angeordnet ist.

Die Drehverstelleinrichtung ist also bevorzugt teilweise oder vollständig zwischen den beiden Grenzen der Längsverstelleinrichtung in Längsrichtung angeordnet.

Erfindungsgemäß weist eine erste Breitenausdehnung der Längsverstelleinrichtung in Breitenrichtung des Fahrzeugsitzes eine erste linke Grenze und eine erste rechte Grenze auf, wobei eine zweite Breitenausdehnung der Drehverstelleinrichtung oder von Teilen der Drehverstelleinrichtung in Breitenrichtung des Fahrzeugsitzes eine zweite linke Grenze und eine zweite rechte Grenze aufweist, wobei, jeweils in Breitenrichtung des Fahrzeugsitzes betrachtet, die erste linke Grenze gleichauf mit oder links von der zweiten linken Grenze und/oder die erste rechte Grenze gleichauf mit oder rechts von der zweiten rechten Grenze angeordnet ist.

Die Drehverstelleinrichtung ist also bevorzugt teilweise oder vollständig zwischen den beiden Grenzen der Längsverstelleinrichtung in Breitenrichtung angeordnet.

Die Längsverstelleinrichtung weist, wie unten noch erläutert wird, zur Führung der Längsverstellung beispielsweise Schienen (zumeist zwei Schienenpaare, welche jeweils eine Führungsschiene und eine damit im Eingriff stehende Gleitschiene umfassen) auf, welche oft Zukaufteile darstellen, die hinsichtlich ihrer mechanischen Auslegung idealerweise bereits gut auf die bei der Benutzung eines Fahrzeugsitzes auftretenden Kräfte und Momente abgestimmt sind. Dies hat jedoch auch zur Folge, dass sich die Bauweise der Schienen und somit die Grenzen des erforderlichen Bauraums der Längsverstelleinrichtung zumindest in Bezug auf die Schienen nicht wesentlich ändern lassen. Gemäß den obigen bevorzugten Merkmalen wird also die Drehverstelleinrichtung vorteilhaft so in den verbleibenden Raum eingepasst, dass keine ohnehin schon vorhandenen und notwendigen Bauraumgrenzen der Längsverstelleinrichtung überschritten werden.

Die kompakte Bauweise kann weiterhin vorteilhaft unterstützt werden, wenn die Längsverstelleinrichtung einen ersten Elektromotor zur Verschiebung des Oberteils gegenüber dem Unterteil in Längsrichtung und/oder Breitenrichtung des Fahrzeugsitzes und die Drehverstelleinrichtung einen zweiten Elektromotor zur Rotation des Oberteils gegenüber dem Unterteil um die Achse in Höhenrichtung des Fahrzeugsitzes aufweisen, und wenn eine erste Antriebsachse des ersten Elektromotors und eine zweite Antriebsachse des zweiten Elektromotors parallel zueinander und/oder parallel zur Längsrichtung oder zur Breitenrichtung des Fahrzeugsitzes angeordnet sind.

So wird die Wahrscheinlichkeit erhöht, dass sich der Bauraum für beide Elektromotoren nicht überschneidet. Vorteilhaft ist die erste Antriebsachse des ersten Elektromotors senkrecht zur Längsausdehnung der Gleit- und Führungsschienen angeordnet. So ist eine mechanische Anbindung des ersten Elektromotors an die Gleitschienen vereinfacht.

Ferner ist es bevorzugt, dass der erste Elektromotor mit einem hinteren Ende des Oberteils und der zweite Elektromotor mit einem vorderen Ende des Oberteils verbunden sind. Die relativ bauraumintensiven Elektroantriebe sind also bevorzugt räumlich getrennt voneinander und/oder möglichst weit beabstandet voneinander angeordnet. Damit kann auch gewährleistet werden, dass entstehende Wärme der Motoren schneller abgeführt werden kann und der eine Elektromotor nicht durch den anderen Elektromotor zusätzlich mit aufgeheizt wird.

Außerdem ist es bevorzugt, wenn die Längsverstelleinrichtung zwei in Längsrichtung und/oder Breitenrichtung angeordnete Schieneneinheiten mit jeweils einer Führungsschiene und einer Gleitschiene umfasst, wobei die Führungsschienen jeweils mit dem Unterteil und die Gleitschienen jeweils mit dem Oberteil verbunden sind. Bevorzugt ist dabei mittels des ersten Elektromotors, welcher zwischen den beiden Schieneneinheiten angeordnet und mit jeder der Gleitschienen über jeweils eine Getriebeeinheit wechselwirkend verbunden ist, die Gleitschiene jeweils gegenüber der Führungsschiene verlagerbar.

Dabei ist es beispielsweise vorgesehen, dass jede der Getriebeeinheiten Folgendes umfasst: eine mit der ersten Antriebsachse des ersten Elektromotors fluchtende und damit wirkverbundene Welle und eine Schneckengetriebeeinheit, welche auf einer ersten Seite mit der Welle und auf einer zweiten Seite mit einem innerhalb einer der Gleitschienen angeordneten Spindelelement wirkverbunden ist, wobei das Spindelelement mit einem starr mit einer der Führungsschienen verbundenen Mitnehmerelement wirkverbunden ist.

Bevorzugt ist die Welle jeweils flexibel ausgestaltet, so dass sie Lagetoleranzen (Positionsabweichungen) zwischen der Antriebsachse des Elektromotors und einer Achse eines ersten Schneckenrads, welches auf der ersten Seite der Schneckengetriebeeinheit angeordnet ist, mittels ihrer Flexibilität ausgleichen kann.

Der erste Elektromotor, die Welle, die Schneckengetriebeeinheit und die Gleitschiene bewegen sich also bei einer Längsverstellung des Oberteils gegenüber dem Unterteil mit. Die Führungsschiene und das Mitnehmerelement hingegen bewegen sich vorteilhaft bei einer Längsverstellung des Oberteils gegenüber dem Unterteil nicht mit.

Generell ist es vorteilhaft, wenn die Drehverstelleinrichtung frei von einer Verbindung zum Unterteil und/oder kontaktlos zum Unterteil ausgestaltet ist, um die gewünschte Relativrotation nicht zu behindern.

Eine vorteilhafte Ausgestaltung der Drehverstelleinrichtung sieht vor, dass diese eine Primärgetriebeeinheit aufweist, welche antriebsseitig mit dem zweiten Elektromotor und abtriebsseitig mit einer Sekundärgetriebeeinheit der Drehverstelleinrichtung mechanisch wirkverbunden ist, wobei die Sekundärgetriebeeinheit mit einer mit dem Oberteil starr verbundenen und gegenüber dem Unterteil drehbar gelagerten Drehtellereinheit der Drehverstelleinrichtung mechanisch wirkverbunden angeordnet ist.

Dabei umfasst die Primärgetriebeeinheit beispielsweise eine Schneckengetriebeeinheit, welche bevorzugt ein erstes und ein zweites Schneckenrad umfasst. Das erste Schneckenrad ist dabei bevorzugt starr mit der zweiten Antriebsachse des zweiten Elektromotors verbunden. Das zweite Schneckenrad steht mit dem ersten Schneckenrad im Eingriff. Bevorzugt ist die Mittelachse des zweiten Schneckenrads senkrecht zur Mittelachse des ersten Schneckenrads und/oder parallel zur Höhenrichtung des Fahrzeugsitzes angeordnet.

Dabei umfasst die Sekundärgetriebeeinheit vorteilhaft ein mit einem Umfang der Drehtellereinheit wechselwirkendes und in sich geschlossenes bandförmiges Kraftübertragungsmittel, welches mittels des zweiten Elektromotors in Richtung seines Umfangs förderbar ist.

Bevorzugt steht das bandförmige Kraftübertragungsmittel mit dem zweiten Schneckenrad in Eingriff, so dass eine Drehung der Antriebsachse des zweiten Elektromotors über das erste Schneckenrad und das zweite Schneckenrad in eine Drehung des bandförmigen Kraftübertragungsmittels übertragen wird. Beispielsweise ist das zweite Schneckenrad hierfür entlang seiner Mittelachse mit zwei benachbarten Funktionsbereichen versehen, wobei der erste Funktionsbereich eine Schrägverzahnung aufweist und mit dem ersten Schneckenrad im Eingriff steht, und wobei der zweite Funktionsbereich zur Wechselwirkung mit dem bandförmigen Kraftübertragungsmittel ausgebildet ist. Beispiele für den zweiten Funktionsbereich werden unten genauer beschrieben.

Der Ausdruck "bandförmig" wird im Sinne der vorliegenden Erfindung verstanden als ein Element, dessen Querschnittsabmessungen im Vergleich zu seiner Länge klein sind. Das bandförmige Element ist bevorzugt bezogen auf seine Länge geschlossen ausgebildet.

Beispielsweise ist die Drehtellereinheit als ein Kettenrad und das bandförmige Kraftübertragungsmittel als ein Kettenelement ausgestaltet. Gemäß dieser Variante ist also eine formschlüssige Wechselwirkung zwischen der Drehtellereinheit und dem bandförmige Kraftübertragungsmittel ausgestaltet. Somit ist hier bevorzugt auch der zweite Funktionsbereich des zweiten Schneckenrads als ein Kettenrad ausgestaltet.

Eine weitere Variante, gemäß welcher eine kraftschlüssige Wechselwirkung zwischen der Drehtellereinheit und dem bandförmige Kraftübertragungsmittel ausgestaltet ist, sieht vor, dass die Drehtellereinheit als ein Riemenscheibenelement und das bandförmige Kraftübertragungsmittel als ein Riemenelement ausgestaltet ist. Beispielsweise ist das bandförmige Kraftübertragungsmittel als ein Keilriemen oder als ein Poly-V-Riemen und die Drehtellereinheit als eine entsprechend komplementär dazu ausgestaltete Riemenscheibe ausgestaltet. Somit ist hier bevorzugt auch der zweite Funktionsbereich des zweiten Schneckenrads als eine entsprechend komplementär zum bandförmigen Kraftübertragungsmittel ausgestaltete Riemenscheibe ausgestaltet.

Bevorzugt umfasst die Drehverstelleinrichtung weiterhin eine Wälzlagerkranzeinheit, welche in Höhenrichtung des Fahrzeugsitzes oberhalb der Drehtellereinheit angeordnet ist. Diese umfasst bevorzugt einen oberen Käfigteller und einen unteren Käfigteller, zwischen welchen Wälzlagerkörper, beispielsweise Kugeln, angeordnet sind.

Der obere Käfigteller ist beispielsweise Teil einer ersten Abdeckplatte, welche die Drehverstelleinrichtung in Höhenrichtung nach oben hin abschließt. Die erste Abdeckplatte ist bevorzugt starr mit der Drehtellereinheit verbunden, so dass eine Rotation der Drehtellereinheit in eine Rotation der ersten Abdeckplatte übertragen wird; bevorzugt erfolgt dies im Übersetzungsverhältnis 1:1.

Der untere Käfigteller ist beispielsweise Teil einer zweiten Abdeckplatte, welche in Höhenrichtung unterhalb der ersten Abdeckplatte angeordnet ist. Bevorzugt ist die zweite Abdeckplatte frei von einer mechanischen Verbindung zur Drehtellereinheit ausgestaltet, so dass eine Rotation der Drehtellereinheit nicht in eine Rotation der zweiten Abdeckplatte übertragen wird.

Insofern sind bevorzugt nur Teile des Oberteils gegenüber dem Unterteil mittels der Drehverstelleinrichtung drehbar gelagert. Bevorzugt sind mittels der Drehverstelleinrichtung drehbar gelagert: die obere Abdeckplatte, die Drehtellereinheit sowie Teile, welche beispielsweise in Höhenrichtung oberhalb der oberen Abdeckplatte angeordnet sind und welche beispielsweise das eigentliche Sitzteil mit Sitzfläche und/oder Rückenlehne ausgestalten. Bevorzugt sind nicht mittels der Drehverstelleinrichtung drehbar gelagert: die Längsverstelleinrichtung, die untere Abdeckplatte, die Primärgetriebeeinheit, der zweite Elektromotor und/oder die Sekundärgetriebeeinheit.

Unter den Teilen der Drehverstelleinrichtung, welche die obigen Bedingungen bezüglich der oberen, unteren, linken, rechten, vorderen und/oder hinteren Grenze erfüllen, sind insbesondere die folgenden Teile einzeln oder in beliebiger Kombination zu verstehen: die Primärgetriebeeinheit, der zweite Elektromotor, die Sekundärgetriebeeinheit und/oder die Drehtellereinheit.

Bevorzugt umfasst die Drehverstelleinrichtung eine Spanneinheit, mittels welcher eine Vorspannung des bandförmigen Kraftübertragungsmittels einstellbar ist. Beispielsweise umfasst die Spanneinheit ein mit dem bandförmigen Kraftübertragungsmittel in Eingriff stehendes Element, dessen Position entlang einer Führungsbahn verstellbar ist. Bevorzugt ist das Element als Scheibe oder als Kettenrad ausgestaltet. Bevorzugt ist die Führungsbahn in einer Ebene ausgebildet, welche senkrecht zur Höhenrichtung des Fahrzeugsitzes und/oder zur Mittelachse des zweiten Schneckenrads angeordnet ist. Beispielsweise ist die Führungsbahn in Form einer Aussparung eines Gehäuseblechs vorgesehen. Bevorzugt ist mittels dieses Gehäuseblechs ebenfalls ein Lagersitz für den zweiten Antriebsmotor ausgebildet.

Es sei darauf hingewiesen, dass im Sinne der vorliegenden Erfindung die Positionsangaben (beispielsweise vorne, hinten, oben, unten, links, rechts etc.) und Richtungsangaben (Höhenrichtung, Längsrichtung, Breitenrichtung) immer in Bezug auf den Fahrzeugsitz definiert sind. Globale Einflüsse, wie zum Beispiel eine Hangabwärtsfahrt eines den Fahrzeugsitz umfassenden Fahrzeugs und eine dadurch resultierenden Auslenkung des Fahrzeugsitzes sind hingegen nicht relevant.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

In der Zeichnung zeigen:
- Figur 1a: eine perspektivische Ansicht von Teilen eines erfindungsgemäßen Fahrzeugsitzes mit einer Längsverstelleinrichtung und einer Drehverstelleinrichtung;
- Figur 1b: die Ansicht gemäß der Fig. 1a ohne obere Abdeckelemente;
- Figur 1c: die Ansicht gemäß der Fig. 1a mit zusätzlich ausgeblendeten Elementen;
- Figur 1d: die Ansicht gemäß der Fig. 1a mit zusätzlich ausgeblendeten Elementen;
- Figur 1e: eine Draufsicht von Teilen des erfindungsgemäßen Fahrzeugsitzes gemäß der Fig. 1;
- Figur 1f, 1g: Querschnittsansichten der Fig. 1e
- Fig. 2a, 2b, 2c: die Ansicht gemäß der Fig. 1e in verschiedenen Rotationszuständen der Drehverstelleinrichtung;
- Fig. 2d: eine weitere perspektivische Ansicht von Teilen des erfindungsgemäßen Fahrzeugsitzes gemäß Fig. 1a;
- Fig. 2e: eine Detailansicht der Ansicht gemäß dem Ausschnitt A' aus Fig. 2d;
- Fig. 3a: eine perspektivische Ansicht der Längsverstelleinrichtung in einem Explosionszustand;
- Fig. 3b: eine Seitenansicht von Teilen des erfindungsgemäßen Fahrzeugsitzes gemäß der Fig. 1a in verschiedenen Translationszuständen der Längsverstelleinrichtung;
- Fig. 3c: eine Draufsicht der Längsverstelleinrichtung;
- Fig. 3d, 3e: Querschnittsansichten der Fig. 3c;
- Fig. 4: eine stark vereinfachte Darstellung eines erfindungsgemäßen Fahrzeugsitzes.

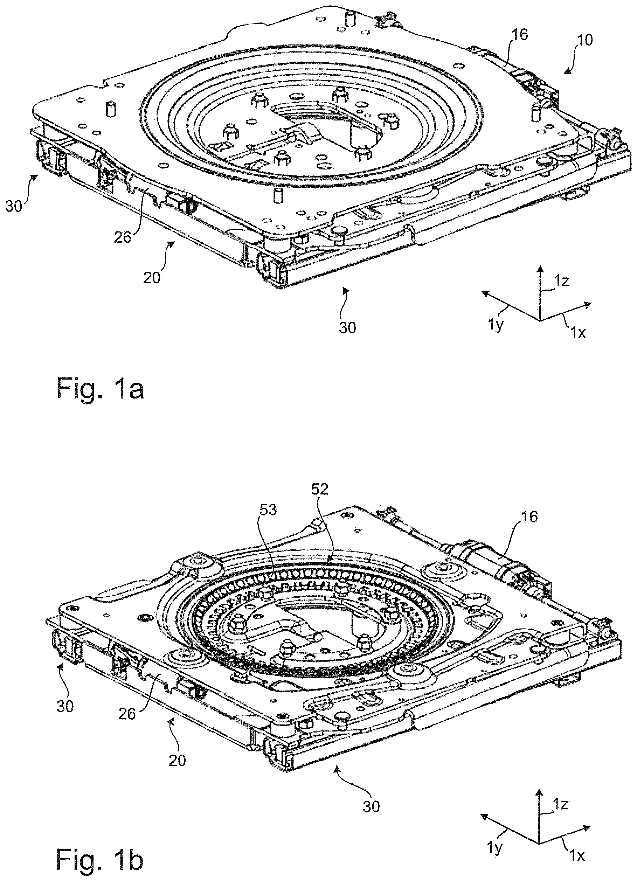

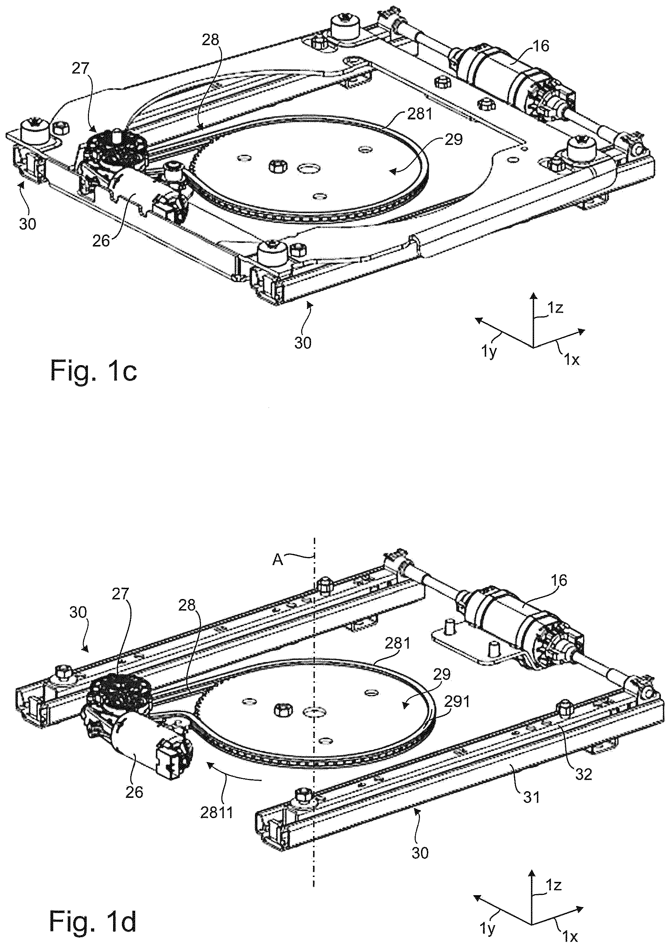

Es sei erwähnt, dass zur besseren Übersichtlichkeit in manchen Figuren einige Komponenten nicht dargestellt sind. So zeigen die Figuren 1a, 1b, 1c, 1d, 1e, 1f, 1g, 2a, 2b, 2c, 2d, 2e, 3a, 3b, 3c, 3d und 3e nur Teile eines erfindungsgemäßen Fahrzeugsitzes 1.

Außerdem sind die Abbildungen jeweils mit einem kartesischen Koordinatensystem versehen, welches die drei Achsen 1x (Längsrichtung des Fahrzeugsitzes 1 von vorne nach hinten entsprechend der Pfeilrichtung), 1y (Breitenrichtung des Fahrzeugsitzes 1 von links nach rechts entsprechend der Pfeilrichtung) sowie 1z (Höhenrichtung des Fahrzeugsitzes 1 von unten nach oben entsprechend der Pfeilrichtung) aufweist.

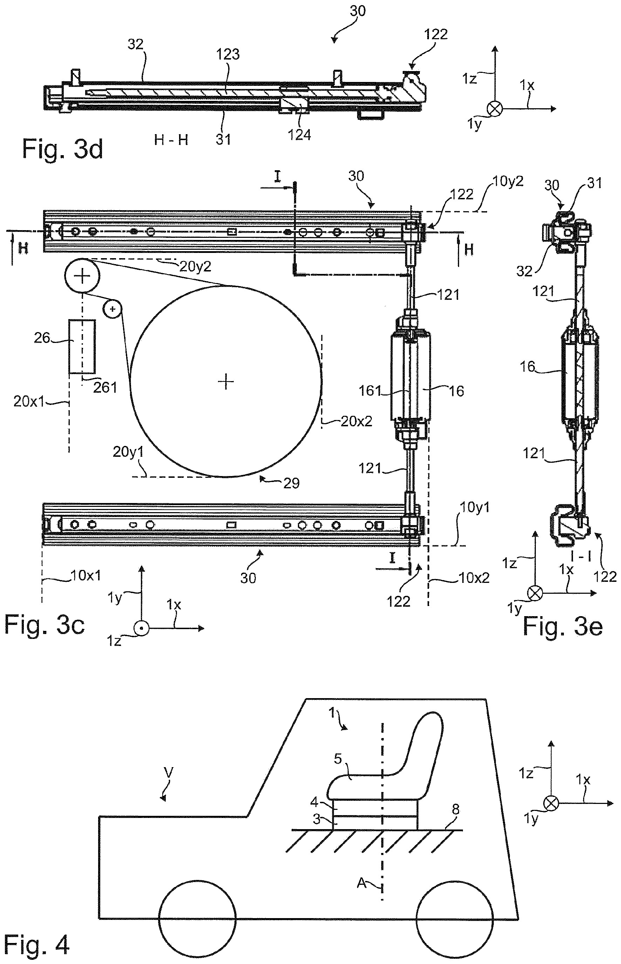

Fig. 4 zeigt schematisch einen Fahrzeugsitz 1 mit einem Unterteil 3 zum Anordnen an einem Karosserieteil 8 eines Nutzfahrzeugs V und einem Oberteil 4 zum Lagern eines Sitzteils 5. Der Fahrzeugsitz 1 umfasst dabei eine gemäß der Fig. 4 nicht gezeigte Längsverstelleinrichtung (siehe Längsverstelleinrichtung 10 gemäß den restlichen Figuren), mittels welcher das Oberteil 4 gegenüber dem Unterteil 3 in Längsrichtung 1x und/oder Breitenrichtung 1y des Fahrzeugsitzes 1 verschiebbar ist, sowie eine von der Längsverstelleinrichtung unabhängig arbeitende und gemäß der Fig. 4 nicht gezeigte Drehverstelleinrichtung (siehe Drehverstelleinrichtung 20 gemäß den restlichen Figuren), mittels welcher zumindest Teile des Oberteils 4 gegenüber dem Unterteil 3 um eine Achse A in Höhenrichtung 1z des Fahrzeugsitzes 1 rotierbar sind.

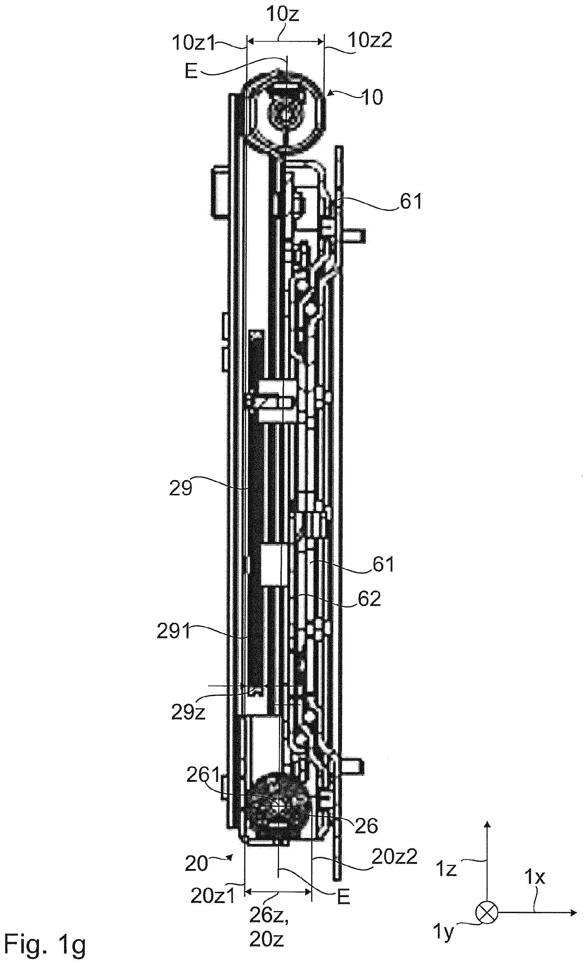

Weiterhin ist eine virtuelle Ebene E bereitgestellt (siehe hier Fig. 1g), welche parallel zu einer Längsrichtung 1x und einer Breitenrichtung 1y des Fahrzeugsitzes 1 sowie die Längsverstelleinrichtung 10 und die Drehverstelleinrichtung 20 schneidend angeordnet ist, wobei die Längsverstelleinrichtung 10 und die Drehverstelleinrichtung 20 elektrisch angetrieben ausgestaltet sind.

Die Längsverstelleinrichtung 10 und die Drehverstelleinrichtung 20 sind also in Höhenrichtung 1x des Fahrzeugsitzes 1 zumindest teilweise überlappend angeordnet.

Die Fig. 1g zeigt außerdem, dass eine erste Höhenausdehnung 10z der Längsverstelleinrichtung 10 in Höhenrichtung 1z des Fahrzeugsitzes 1 eine erste obere Grenze 10z1 und eine erste untere Grenze 10z2 aufweist, und dass eine zweite Höhenausdehnung 20z von Teilen der Drehverstelleinrichtung 20 in Höhenrichtung 1z des Fahrzeugsitzes 1 eine zweite obere Grenze 20z1 und eine zweite untere Grenze 20z2 aufweist, wobei, jeweils in Höhenrichtung 1z des Fahrzeugsitzes 1 betrachtet, die erste obere Grenze 10z1 oberhalb von der zweiten oberen Grenze 20z1 und die erste untere Grenze 10z2 unterhalb von der zweiten unteren Grenze 20z2 angeordnet ist.

Die Drehverstelleinrichtung 20 ist also vorliegend teilweise zwischen den beiden Grenzen 10z1, 10z2 der Längsverstelleinrichtung 10 in Höhenrichtung 1z angeordnet.

Vorliegend ist die erste obere Grenze 10z1 und die erste untere Grenze 10z2 mittels eines ersten Elektromotors 16 ausgestaltet. Vorliegend ist die zweite obere Grenze 20z1 und die zweite untere Grenze 20z2 mittels eines zweiten Elektromotors 26 ausgestaltet. Nicht gezeigt sind weitere Elemente der Drehverstelleinrichtung 20, welche gegebenenfalls oberhalb der ersten oberen Grenze 10z1 angeordnet sind.

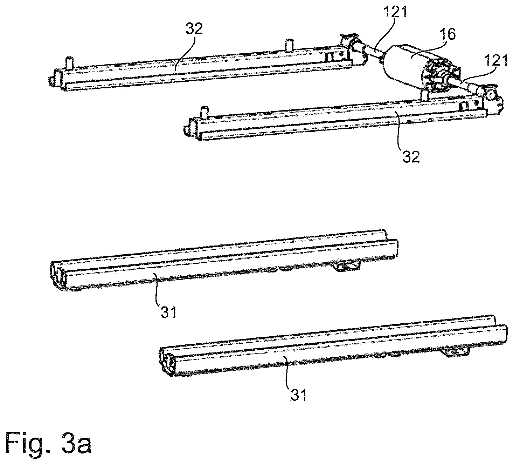

Ferner ist gemäß der Fig. 3c gezeigt, dass eine erste Längsausdehnung 10x der Längsverstelleinrichtung 10 in Längsrichtung 1x des Fahrzeugsitzes 1 eine erste vordere Grenze 10x1 und eine erste hintere Grenze 10x2 aufweist, wobei eine zweite Längsausdehnung 20x von Teilen der Drehverstelleinrichtung 20 in Längsrichtung 1x des Fahrzeugsitzes 1 eine zweite vordere Grenze 20x1 und eine zweite hintere Grenze 20x2 aufweist, wobei, jeweils in Längsrichtung 1x des Fahrzeugsitzes 1 betrachtet, die erste vordere Grenze 10x1 vor der zweiten vorderen Grenze 20x1 und die erste hintere Grenze 10x2 hinter der zweiten hinteren Grenze 20x2 angeordnet ist.

Die Drehverstelleinrichtung 20 ist also vorliegend teilweise zwischen den beiden Grenzen 10x1, 10x2 der Längsverstelleinrichtung 10 in Längsrichtung 1x angeordnet.

Vorliegend ist die erste vordere Grenze 10x1 mittels der beiden Schieneneinheiten 30 und die erste hintere Grenze 10x2 mittels des ersten Elektromotors 16 ausgestaltet. Vorliegend ist die zweite vordere Grenze 20x1 mittels des zweiten Elektromotors 26 und die zweite hintere Grenze 20x2 mittels eines bandförmigen Kraftübertragungsmittels 281 ausgestaltet. Nicht gezeigt sind weitere Elemente der Drehverstelleinrichtung 20, welche gegebenenfalls außerhalb eines Bereichs zwischen der ersten vorderen Grenze 10x1 und der ersten hinteren Grenze 10x2 angeordnet sind.

Weiterhin zeigt die Fig. 3c, dass eine erste Breitenausdehnung 10y der Längsverstelleinrichtung 10 in Breitenrichtung 1y des Fahrzeugsitzes 1 eine erste linke Grenze 10y1 und eine erste rechte Grenze 10y2 aufweist, wobei eine zweite Breitenausdehnung 20y der Drehverstelleinrichtung 20 in Breitenrichtung 1y des Fahrzeugsitzes 1 eine zweite linke Grenze 20y1 und eine zweite rechte Grenze 20y2 aufweist, wobei, jeweils in Breitenrichtung 1y des Fahrzeugsitzes 1 betrachtet, die erste linke Grenze 10y1 links von der zweiten linken Grenze 20y1 und die erste rechte Grenze 10y2 rechts von der zweiten rechten Grenze 20y2 angeordnet ist.

Die Drehverstelleinrichtung 20 ist also vorliegend vollständig zwischen den beiden Grenzen 10y1, 10y2 der Längsverstelleinrichtung 10 in Breitenrichtung 1y angeordnet.

Vorliegend ist die erste linke Grenze 10y1 mittels der linken Schienen 30 und die erste rechte Grenze 10y2 mittels der rechten Schienen 30 ausgestaltet. Vorliegend ist die zweite linke Grenze 20y1 mittels des bandförmigen Kraftübertragungsmittels 281 und die zweite rechte Grenze 20y2 mittels einer Primärgetriebeeinheit 27 ausgestaltet.

Vorliegend umfassen die Längsverstelleinrichtung 10 einen ersten Elektromotor 16 zur Verschiebung des Oberteils 4 gegenüber dem Unterteil 3 in Längsrichtung 1x des Fahrzeugsitzes 1 und die Drehverstelleinrichtung 20 einen zweiten Elektromotor 26 zur Rotation des Oberteils 4 gegenüber dem Unterteil 3 um die Achse A in Höhenrichtung 1z des Fahrzeugsitzes 1, wobei eine erste Antriebsachse 161 des ersten Elektromotors 16 und eine zweite Antriebsachse 261 des zweiten Elektromotors 26 parallel zueinander und parallel zur Breitenrichtung 1y des Fahrzeugsitzes 1 angeordnet sind (siehe Fig. 3c).

Der Bauraum für beide Elektromotoren 16, 26 und die beiden Elektromotoren 16, 26 selbst sind also vorliegend beabstandet zueinander angeordnet. Vorliegend ist die erste Antriebsachse 161 des ersten Elektromotors 16 senkrecht zur Längsausdehnung der Gleitschienen 32 und der Führungsschienen 31 angeordnet. So ist eine mechanische Anbindung des ersten Elektromotors 16 an die Gleitschienen 32 vereinfacht.

Die Fig. 3c zeigt auch, dass der erste Elektromotor 16 mit einem hinteren Ende 42 des Oberteils 4 und der zweite Elektromotor 26 mit einem vorderen Ende 41 des Oberteils 4 verbunden sind. Die relativ bauraumintensiven Elektromotoren 16, 26 sind also räumlich getrennt voneinander und darüber hinaus möglichst weit beabstandet voneinander angeordnet.

Insbesondere die Fig. 3d zeigt ferner, dass die Längsverstelleinrichtung 10 zwei in Längsrichtung 1x und/oder Breitenrichtung 1y angeordnete Schieneneinheiten 30 mit jeweils einer Führungsschiene 31 und einer Gleitschiene 32 umfasst, wobei die Führungsschienen 31 jeweils mit dem Unterteil 3 und die Gleitschienen 32 jeweils mit dem Oberteil 4 verbunden sind. Außerdem zeigt die Fig. 3c, dass vorliegend mittels des ersten Elektromotors 16, welcher zwischen den beiden Schieneneinheiten 30 angeordnet und mit jeder der Gleitschienen 32 über jeweils eine Getriebeeinheit 12 wechselwirkend verbunden ist, die Gleitschiene 32 jeweils gegenüber der Führungsschiene 31 verlagerbar ist.

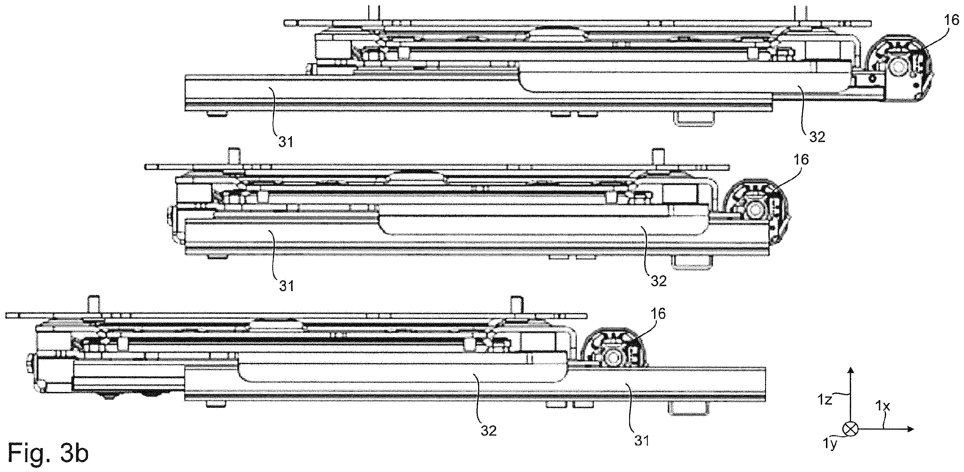

Die Fig. 3b zeigt jeweils bezüglich einer Längsverstellung in Längsrichtung 1x der Gleitschiene 32 gegenüber der Führungsschiene 31 verschiedene Zustände: von oben nach unten einen hinteren Maximalzustand, einen mittleren Zustand und einen vorderen Maximalzustand.

Dabei ist gemäß den Fig. 3c, 3d und 3e gezeigt, dass jede der Getriebeeinheiten 12 vorliegend Folgendes umfasst: eine mit der ersten Antriebsachse 161 des ersten Elektromotors 16 fluchtende und damit wirkverbundene Welle 121 und eine Schneckengetriebeeinheit 122, welche auf einer ersten Seite mit der Welle 121 und auf einer zweiten Seite mit einem innerhalb einer der Gleitschienen 32 angeordneten Spindelelement 123 wirkverbunden ist, wobei das Spindelelement 123 mit einem starr mit einer der Führungsschienen 31 verbundenen Mitnehmerelement 124 wirkverbunden ist.

Generell ist es vorliegend vorgesehen, dass die Drehverstelleinrichtung 20 frei von einer Verbindung zum Unterteil 3 und kontaktlos zum Unterteil 3 ausgestaltet ist.

Vorliegend zeigt insbesondere die Fig. 1d, dass die Drehverstelleinrichtung 20 eine Primärgetriebeeinheit 27 aufweist, welche antriebsseitig mit dem zweiten Elektromotor 26 und abtriebsseitig mit einer Sekundärgetriebeeinheit 28 der Drehverstelleinrichtung 20 wirkverbunden ist, wobei die Sekundärgetriebeeinheit 28 mit einer mit dem Oberteil 4 starr verbundenen und gegenüber dem Unterteil 3 drehbar gelagerten Drehtellereinheit 29 der Drehverstelleinrichtung 20 wirkverbunden angeordnet ist.

Details der Primärgetriebeeinheit 27 sind nicht gezeigt. Es umfasst die Primärgetriebeeinheit 27 vorliegend eine Schneckengetriebeeinheit, welche ein erstes und ein zweites Schneckenrad umfasst. Das erste Schneckenrad ist dabei starr mit der zweiten Antriebsachse 261 des zweiten Elektromotors 26 verbunden. Das zweite Schneckenrad steht mit dem ersten Schneckenrad im Eingriff, wobei die Mittelachse des zweiten Schneckenrads senkrecht zur Mittelachse des ersten Schneckenrads und parallel zur Höhenrichtung 1z des Fahrzeugsitzes 1 angeordnet ist.

Es umfasst die Sekundärgetriebeeinheit 28 vorliegend ein mit einem Umfang 291 der Drehtellereinheit 29 wechselwirkendes und in sich geschlossenes bandförmiges Kraftübertragungsmittel 281, welches mittels des zweiten Elektromotors 26 in Richtung seines Umfangs 2811 förderbar ist.

Vorliegend steht das bandförmige Kraftübertragungsmittel 281 mit dem nicht gezeigten zweiten Schneckenrad in Eingriff, so dass eine Drehung der Antriebsachse 261 des zweiten Elektromotors 26 über das erste Schneckenrad und das zweite Schneckenrad in eine Drehung des bandförmigen Kraftübertragungsmittels 281 und in eine Drehung der Drehtellereinheit 29 übertragen wird. Vorliegend ist das zweite Schneckenrad hierfür entlang seiner Mittelachse mit zwei benachbarten Funktionsbereichen versehen, wobei der erste Funktionsbereich eine Schrägverzahnung aufweist und mit dem ersten Schneckenrad im Eingriff steht, und wobei der zweite Funktionsbereich zur Wechselwirkung mit dem bandförmigen Kraftübertragungsmittel 281 ausgebildet ist.

Das bandförmige Kraftübertragungsmittel 281 ist vorliegend ein Element, dessen Querschnittsabmessungen im Vergleich zur Länge klein sind. Es ist vorliegend bezogen auf seine Länge geschlossen ausgebildet.

Vorliegend ist die Drehtellereinheit 29 als ein Kettenrad und das bandförmige Kraftübertragungsmittel 281 als ein Kettenelement oder eine Kette ausgestaltet. Gemäß dieser Variante ist also eine formschlüssige Wechselwirkung zwischen der Drehtellereinheit 29 und dem bandförmige Kraftübertragungsmittel 281 ausgestaltet. Somit ist hier vorliegend auch der zweite Funktionsbereich des zweiten Schneckenrads als ein Kettenrad ausgestaltet.

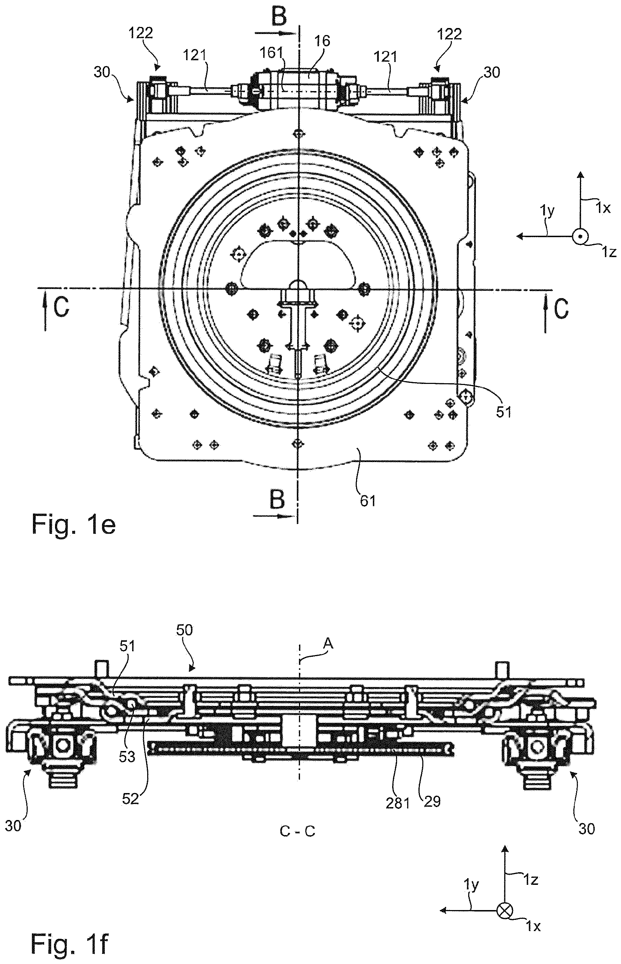

Vorliegend umfasst die Drehverstelleinrichtung 20 weiterhin eine Wälzlagerkranzeinheit 50 (siehe hier insbesondere Fig. 1f), welche in Höhenrichtung 1z des Fahrzeugsitzes 1 oberhalb der Drehtellereinheit 29 angeordnet ist. Diese umfasst bevorzugt einen oberen Käfigteller 51 und einen unteren Käfigteller 52, zwischen welchen Wälzlagerkörper 53, beispielsweise Kugeln, angeordnet sind.

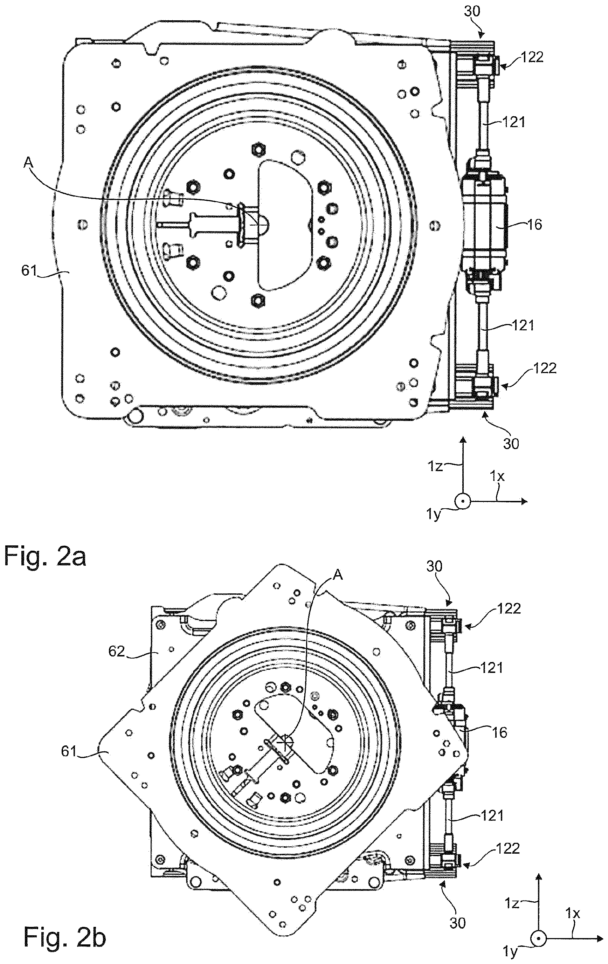

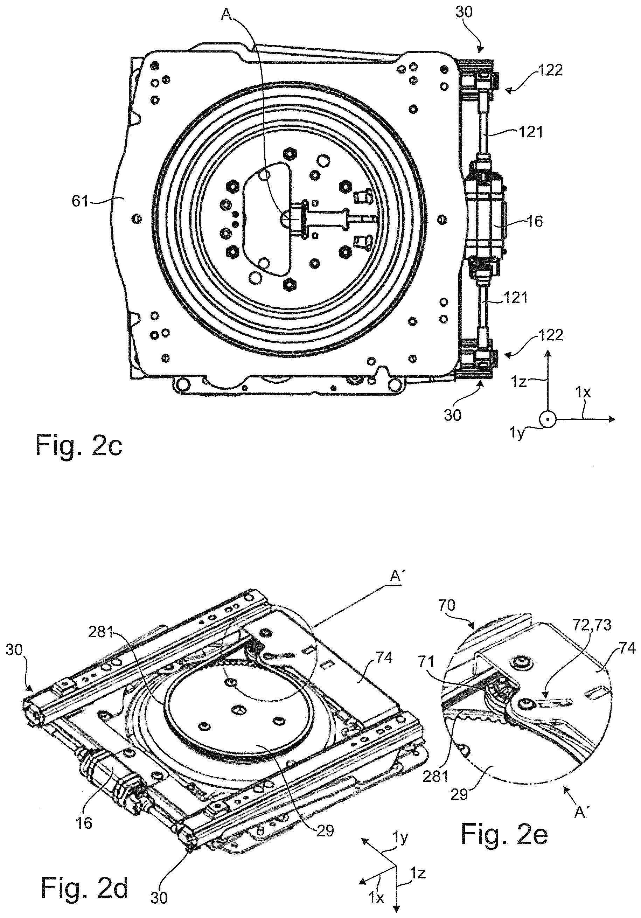

Der obere Käfigteller 51 ist vorliegend Teil einer ersten Abdeckplatte 61, welche die Drehverstelleinrichtung 20 in Höhenrichtung 1z nach oben hin abschließt (siehe hier Fig. 1e). Die erste Abdeckplatte 61 ist vorliegend starr mit der Drehtellereinheit 29 verbunden, so dass eine Rotation der Drehtellereinheit 29 im Übersetzungsverhältnis 1:1in eine Rotation der ersten Abdeckplatte 61 übertragen wird. Die Figuren 2a, 2b und 2c zeigen hier verschiedene Rotationszustände der ersten Abdeckplatte 61.

Der untere Käfigteller 52 ist vorliegend Teil einer zweiten Abdeckplatte 62, welche in Höhenrichtung 1z unterhalb der ersten Abdeckplatte 61 angeordnet ist. Vorliegend ist die zweite Abdeckplatte 62 bis auf die Wälzlagerung mittels der Kugeln 53 frei von einer mechanischen Verbindung zur Drehtellereinheit 29 ausgestaltet, so dass eine Rotation der Drehtellereinheit 29 nicht in eine Rotation der zweiten Abdeckplatte 62 übertragen wird.

Es sind vorliegend mittels der Drehverstelleinrichtung 20 drehbar gelagert: die obere Abdeckplatte 61, die Drehtellereinheit 29 sowie nicht dargestellte Teile, welche beispielsweise in Höhenrichtung 1z oberhalb der oberen Abdeckplatte 61 angeordnet sind und welche beispielsweise das eigentliche Sitzteil 5 mit Sitzfläche und/oder Rückenlehne ausgestalten. Vorliegend sind nicht mittels der Drehverstelleinrichtung 20 drehbar gelagert: die Längsverstelleinrichtung 10, die untere Abdeckplatte 62, die Primärgetriebeeinheit 27 und der zweite Elektromotor 26.

Unter den Teilen der Drehverstelleinrichtung 20, welche die obigen Bedingungen bezüglich der oberen 10z1, 20z1, unteren 10z2, 20z2, linken 10y1, 20y1, rechten 10y2, 20y2, vorderen 10x1, 20x1 und hinteren Grenzen 10x2, 20x2 erfüllen, sind vorliegend insbesondere die folgenden Teile einzeln oder in beliebiger Kombination zu verstehen: die Primärgetriebeeinheit 27, der zweite Elektromotor 26, die Sekundärgetriebeeinheit 28 und die Drehtellereinheit 29.

Vorliegend umfasst die Drehverstelleinrichtung 20 eine Spanneinheit 70, mittels welcher eine Vorspannung des bandförmigen Kraftübertragungsmittels 281 einstellbar ist (siehe hier insbesondere Fig. 2d und 2e, welche jeweils eine Ansicht der kombinierten Längsverstelleinrichtung 10 und Drehverstelleinrichtung 20 von unten zeigen). Vorliegend umfasst die Spanneinheit 70 ein mit dem bandförmigen Kraftübertragungsmittel 281 in Eingriff stehendes Element 71, dessen Position entlang einer Führungsbahn 72 verstellbar ist. Vorliegend ist das Element 71 als Kettenrad ausgestaltet. Vorliegend ist die Führungsbahn 72 in einer Ebene ausgebildet, welche senkrecht zur Mittelachse des nicht gezeigten zweiten Schneckenrads und damit senkrecht zur Höhenrichtung 1z angeordnet ist. Vorliegend ist die Führungsbahn 72 in Form einer Aussparung 73 eines Gehäuseblechs 74 vorgesehen. Vorliegend ist mittels dieses Gehäuseblechs 74 ebenfalls ein Lagersitz für den zweiten Elektromotor 26 ausgebildet.

Es versteht sich, dass es sich bei den vorstehend erläuterten Ausführungsbeispielen lediglich um eine erste Ausgestaltung des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 1x: Längsrichtung
- 1y: Breitenrichtung
- 1z: Höhenrichtung
- 3: Unterteil
- 4: Oberteil
- 5: Sitzteil
- 8: Karosserieteil
- 10: Längsverstelleinrichtung
- 12: Getriebeeinheit
- 16, 26: Elektromotor
- 20: Drehverstelleinrichtung
- 27: Primärgetriebeeinheit
- 28: Sekundärgetriebeeinheit
- 29: Drehtellereinheit
- 30: Schieneneinheit
- 31: Führungsschiene
- 32: Gleitschiene
- 41,42: Ende
- 50: Wälzlagerkranzeinheit
- 51, 52: Käfigteller
- 61, 62: Abdeckplatte
- 70: Spanneinheit
- 121: Welle
- 122: Schneckengetriebeeinheit
- 123: Spindelelement
- 124: Mitnehmerelement
- 161, 261: Antriebsachse
- 281: bandförmiges Kraftübertragungsmittel
- 291,2811: Umfang
- A: Achse
- E: Ebene
- V: Nutzfahrzeug

## Patentansprüche

1. Fahrzeugsitz (1) mit einem Unterteil (3) zum Anordnen an einem Karosserieteil (8) eines Nutzfahrzeugs (V) und einem Oberteil (4) zum Lagern eines Sitzteils (5), wobei der Fahrzeugsitz (1) eine Längsverstelleinrichtung (10), mittels welcher das Oberteil (4) gegenüber dem Unterteil (3) in Längsrichtung (1x) und/oder Breitenrichtung (1y) des Fahrzeugsitzes (1) verschiebbar ist, sowie eine von der Längsverstelleinrichtung (10) unabhängig arbeitende Drehverstelleinrichtung (20), mittels welcher zumindest Teile des Oberteils (4) gegenüber dem Unterteil (3) um eine Achse (A) in Höhenrichtung (1z) des Fahrzeugsitzes (1) rotierbar sind, aufweist,
**dadurch gekennzeichnet, dass**
eine virtuelle Ebene (E) bereitgestellt ist, welche parallel zu einer Längsrichtung (1x) und einer Breitenrichtung (1y) des Fahrzeugsitzes (1) sowie die Längsverstelleinrichtung (10) und die Drehverstelleinrichtung (20) schneidend angeordnet ist, wobei eine erste Breitenausdehnung (10y) der Längsverstelleinrichtung (10) in Breitenrichtung (1y) des Fahrzeugsitzes (1) eine erste linke Grenze (10y1) und eine erste rechte Grenze (10y2) aufweist, wobei eine zweite Breitenausdehnung (20y) der Drehverstelleinrichtung (20) in Breitenrichtung (1y) des Fahrzeugsitzes (1) eine zweite linke Grenze (20y1) und eine zweite rechte Grenze (20y2) aufweist, wobei, jeweils in Breitenrichtung (1y) des Fahrzeugsitzes (1) betrachtet, die erste linke Grenze (10y1) gleichauf mit oder links von der zweiten linken Grenze (20y1) und/oder die erste rechte Grenze (10y2) gleichauf mit oder rechts von der zweiten rechten Grenze (20y2) angeordnet ist, wobei die Längsverstelleinrichtung (10) und die Drehverstelleinrichtung (20) elektrisch angetrieben ausgestaltet sind.

2. Fahrzeugsitz (1) nach Anspruch 1,
**dadurch gekennzeichnet, dass**
eine erste Höhenausdehnung (10z) der Längsverstelleinrichtung (10) in Höhenrichtung (1z) des Fahrzeugsitzes (1) eine erste obere Grenze (10z1) und eine erste untere Grenze (10z2) aufweist, wobei eine zweite Höhenausdehnung (20z) der Drehverstelleinrichtung (20) in Höhenrichtung (1z) des Fahrzeugsitzes (1) eine zweite obere Grenze (20z1) und eine zweite untere Grenze (20z2) aufweist, wobei, jeweils in Höhenrichtung (1z) des Fahrzeugsitzes (1) betrachtet, die erste obere Grenze (10z1) gleichauf mit oder oberhalb von der zweiten oberen Grenze (20z1) und/oder die erste untere Grenze (10z2) gleichauf mit oder unterhalb von der zweiten unteren Grenze (20z2) angeordnet ist.

3. Fahrzeugsitz (1) nach einem der vorhergehenden Ansprüche,
**dadurch gekennzeichnet, dass**
eine erste Längsausdehnung (10x) der Längsverstelleinrichtung (10) in Längsrichtung (1x) des Fahrzeugsitzes (1) eine erste vordere Grenze (10x1) und eine erste hintere Grenze (10x2) aufweist, wobei eine zweite Längsausdehnung (20x) der Drehverstelleinrichtung (20) in Längsrichtung (1x) des Fahrzeugsitzes (1) eine zweite vordere Grenze (20x1) und eine zweite hintere Grenze (20x2) aufweist, wobei, jeweils in Längsrichtung (1x) des Fahrzeugsitzes (1) betrachtet, die erste vordere Grenze (10x1) gleichauf mit oder vor der zweiten vorderen Grenze (20x1) und/oder die erste hintere Grenze (10x2) gleichauf mit oder hinter der zweiten hinteren Grenze (20x2) angeordnet ist.

4. Fahrzeugsitz (1) nach einem der vorhergehenden Ansprüche,
**dadurch gekennzeichnet, dass**
die Längsverstelleinrichtung (10) einen ersten Elektromotor 16) zur Verschiebung des Oberteils (4) gegenüber dem Unterteil (3) in Längsrichtung (1x) und/oder Breitenrichtung (1y) des Fahrzeugsitzes (1) und die Drehverstelleinrichtung (20) einen zweiten Elektromotor (26) zur Rotation des Oberteils (4) gegenüber dem Unterteil (3) um die Achse (A) in Höhenrichtung (1z) des Fahrzeugsitzes (1) aufweisen, wobei eine erste Antriebsachse (161) des ersten Elektromotors (16) und eine zweite Antriebsachse (261) des zweiten Elektromotors (26) parallel zueinander und/oder parallel zur Längsrichtung (1x) oder zur Breitenrichtung (1y) des Fahrzeugsitzes (1) angeordnet sind.

5. Fahrzeugsitz (1) nach Anspruch 4,
**dadurch gekennzeichnet, dass**
der erste Elektromotor (16) mit einem hinteren Ende (42) des Oberteils (4) und der zweite Elektromotor (26) mit einem vorderen Ende (41) des Oberteils (4) verbunden sind.

6. Fahrzeugsitz (1) nach einem der vorhergehenden Ansprüche,
**dadurch gekennzeichnet, dass**
die Längsverstelleinrichtung (10) zwei in Längsrichtung (1x) und/oder Breitenrichtung (1y) angeordnete Schieneneinheiten (30) mit jeweils einer Führungsschiene (31) und einer Gleitschiene (32) umfasst, wobei die Führungsschienen (31) jeweils mit dem Unterteil (3) und die Gleitschienen (32) jeweils mit dem Oberteil (4) verbunden sind, wobei mittels des ersten Elektromotors (16), welcher zwischen den beiden Schieneneinheiten (30) angeordnet und mit jeder der Gleitschienen (32) über jeweils eine Getriebeeinheit (12) wechselwirkend verbunden ist, die Gleitschiene (32) jeweils gegenüber der Führungsschiene (31) verlagerbar ist.

7. Fahrzeugsitz (1) nach Anspruch 6,
**dadurch gekennzeichnet, dass**
jede der Getriebeeinheiten (12) umfasst:
eine mit der ersten Antriebsachse (161) des ersten Elektromotors (16) fluchtende und damit wirkverbundene Welle (121), eine Schneckengetriebeeinheit (122), welche auf einer ersten Seite (1221) mit der Welle (121) und auf einer zweiten Seite (1222) mit einem innerhalb einer der Gleitschienen (32) angeordneten Spindelelement (123) wirkverbunden ist, wobei das Spindelelement (123) mit einem starr mit einer der Führungsschienen (111) verbundenen Mitnehmerelement (124) wirkverbunden ist.

8. Fahrzeugsitz (1) nach einem der vorhergehenden Ansprüche,
**dadurch gekennzeichnet, dass**
die Drehverstelleinrichtung (20) frei von einer Verbindung zum Unterteil (3) ausgestaltet ist.

9. Fahrzeugsitz (1) nach einem der vorhergehenden Ansprüche,
**dadurch gekennzeichnet, dass**
die Drehverstelleinrichtung (20) eine Primärgetriebeeinheit (27) aufweist, welche antriebsseitig mit dem zweiten Elektromotor (26) und abtriebsseitig mit einer Sekundärgetriebeeinheit (28) mechanisch wirkverbunden ist, wobei die Sekundärgetriebeeinheit (28) mit einer mit dem Oberteil (4) starr verbundenen und gegenüber dem Unterteil (3) drehbar gelagerten Drehtellereinheit (29) der Drehverstelleinrichtung (20) mechanisch wirkverbunden angeordnet ist, wobei die Sekundärgetriebeeinheit (28) ein mit einem Umfang (291) der Drehtellereinheit (29) wechselwirkendes und in sich geschlossenes bandförmiges Kraftübertragungsmittel (281) umfasst, welches mittels des zweiten Elektromotors (26) in Richtung seines Umfangs (2811) förderbar ist.

## Claims

1. Vehicle seat (1) with a lower part (3) for arrangement on a body part (8) of a commercial vehicle (V) and an upper part (4) for storing a seat part (5), wherein the vehicle seat (1) has a longitudinal adjustment device (10), by means of which the upper part (4) is displaceable relative to the lower part (3) in the longitudinal direction (1x) and/or width direction (1y) of the vehicle seat (1), and a rotational adjustment device (20) working independently of the longitudinal adjustment device (10), by means of which rotational adjustment device at least parts of the upper part (4) are rotatable relative to the lower part (3) about an axis (A) in the height direction (1z) of the vehicle seat (1),
**characterised in that**
a virtual plane (E) is provided, which is arranged intersectingly parallel to a longitudinal direction (1x) and a width direction (1y) of the vehicle seat (1) as well as the longitudinal adjustment device (10) and the rotational adjustment device (20), wherein a first width extension (10y) of the longitudinal adjustment device (10) has a first left boundary (10y1) and a first right boundary (10y2) in the width direction (1y) of the vehicle seat (1), wherein a second width extension (20y) of the rotational adjustment device (20) has a second left boundary (20y1) and a second right boundary (20y2) in the width direction (1y) of the vehicle seat (1), wherein, viewed in each case in the width direction (1y) of the vehicle seat (1), the first left boundary (10y1) is arranged level with or to the left of the second left boundary (20y1), and/or the first right boundary (10y2) is arranged level with or to the right of the second right boundary (20y2)wherein the longitudinal adjustment device (10) and the rotational adjustment device (20) are designed to be electrically driven.

2. Vehicle seat (1) according to claim 1,
**characterised in that**
a first height extension (10z) of the longitudinal adjustment device (10) has a first upper boundary (10z1) and a first lower boundary (10z2) in the height direction (1z) of the vehicle seat (1), wherein a second height extension (20z) of the rotational adjustment device (20) has a second upper boundary (20z1) and a second lower boundary (20z2) in the height direction (1z) of the vehicle seat (1), wherein, viewed in each case in the height direction (1z) of the vehicle seat (1), the first upper boundary (10z1) is arranged level with or above the second upper boundary (20z1), and/or the first lower boundary (10z2) is arranged level with or below the second lower boundary (20z2).

3. Vehicle seat (1) according to one of the preceding claims,
**characterised in that**
a first longitudinal extension (10x) of the longitudinal adjustment device (10) has a first front boundary (10x1) and a first rear boundary (10x2) in the longitudinal direction (1x) of the vehicle seat (1), wherein a second longitudinal extension (20x) of the rotational adjustment device (20) has a second front boundary (20x1) and a second rear boundary (20x2) in the longitudinal direction (1x) of the vehicle seat (1), wherein, viewed in each case in the longitudinal direction (1x) of the vehicle seat (1), the first front boundary (10x1) is arranged level with or in front of the second front boundary (20x1), and/or the first rear boundary (10x2) is arranged level with or behind the second rear boundary (20x2).

4. Vehicle seat (1) according to one of the preceding claims,
**characterised in that**
the longitudinal adjustment device (10) has a first electric motor (16) for displacing the upper part (4) relative to the lower part (3) in the longitudinal direction (1x) and/or width direction (1y) of the vehicle seat (1), and the rotational adjustment device (20) has a second electric motor (26) for rotating the upper part (4) relative to the lower part (3) about the axis (A) in the height direction (1z) of the vehicle seat (1), wherein a first drive axle (161) of the first electric motor (16) and a second drive axle (261) of the second electric motor (26) are arranged parallel to one another, and/or parallel to the longitudinal direction (1x), or to the width direction (1y) of the vehicle seat (1).

5. Vehicle seat (1) according to claim 4,
**characterised in that**
the first electric motor (16) is connected to a rear end (42) of the upper part (4), and the second electric motor (26) is connected to a front end (41) of the upper part (4).

6. Vehicle seat (1) according to one of the preceding claims,
**characterised in that**
the longitudinal adjustment device (10) comprises two rail units (30) arranged in the longitudinal direction (1x) and/or width direction (1y), each with a guide rail (31) and a slide rail (32), wherein the guide rails (31) are each connected to the lower part (3), and the slide rails (32) are each connected to the upper part (4), wherein, by means of the first electric motor (16), which is arranged between the two rail units (30) and is interactively connected to each of the slide rails (32) via a respective gear unit (12), the slide rail (32) is displaceable in each case relative to the guide rail (31).

7. Vehicle seat (1) according to claim 6,
**characterised in that**
each of the gear units (12) comprises:
a shaft (121) aligned with the first drive axle (161) of the first electric motor (16) and operatively connected thereto, a worm gear unit (122) which is operatively connected on a first side (1221) to the shaft (121) and, on a second side (1222), to a spindle element (123) arranged within one of the slide rails (32), wherein the spindle element (123) is operatively connected to a driver element (124) rigidly connected to one of the guide rails (111).

8. Vehicle seat (1) according to one of the preceding claims,
**characterised in that**
the rotational adjustment device (20) is designed free of a connection to the lower part (3).

9. Vehicle seat (1) according to one of the preceding claims,
**characterised in that**
the rotational adjustment device (20) has a primary gear unit (27), which is mechanically operatively connected on the drive side to the second electric motor (26) and, on the output side, to a secondary gear unit (28), wherein the secondary gear unit (28) is arranged to be mechanically operatively connected to a rotary plate unit (29) of the rotational adjustment device (20) which is rotatably mounted with respect to the lower part (3) and rigidly connected to the upper part (4), wherein the secondary gear unit (28) comprises a self-contained ribbon-shaped force transmission means (281), which interacts with a circumference (291) of the rotary plate unit (29), and which can be conveyed in the direction of its circumference (2811) by means of the second electric motor (26).

## Revendications

1. Siège de véhicule (1) comportant une partie inférieure (3) à disposer sur une partie de carrosserie (8) d'un véhicule utilitaire (V) et une partie supérieure (4) pour stocker une partie siège (5), le siège de véhicule (1) présentant un dispositif de réglage en longueur (10) au moyen duquel la partie supérieure (4) est déplaçable par rapport à la partie inférieure (3) dans la direction de la longueur (1x) et/ou dans la direction de la largeur (1y) du siège de véhicule (1), ainsi qu'un dispositif de réglage en rotation (20) fonctionnant indépendamment du dispositif de réglage en longueur (10), au moyen duquel au moins des parties de la partie supérieure (4) sont aptes à tourner par rapport à la partie inférieure (3) autour d'un axe (A) dans la direction de la hauteur (1z) du siège de véhicule (1),
**caractérisé par le fait qu'**
un plan virtuel (E) est prévu, lequel est disposé parallèlement à une direction de la longueur (1x) et à une direction de la largeur (1y) du siège de véhicule (1) ainsi que coupant le dispositif de réglage en longueur (10) et le dispositif de réglage en rotation (20),
une première extension en largeur (10y) du dispositif de réglage en longueur (10) présentant, dans la direction de la largeur (1y) du siège de véhicule (1), une première limite gauche (10y1) et une première limite droite (10y2), une seconde extension en largeur (20y) du dispositif de réglage en rotation (20) présentant, dans la direction de la largeur (1y) du siège de véhicule (1), une seconde limite gauche (20y1) et une seconde limite droite (20y2), la première limite gauche (10y1) étant disposée au même niveau que la seconde limite gauche (20y1) ou à gauche de celle-ci et/ou la première limite droite (10y2) étant disposée au même niveau que la seconde limite droite (20y2) ou à droite de celle-ci, en considérant à chaque fois la direction de la largeur (1y) du siège de véhicule (1),
le dispositif de réglage en longueur (10) et le dispositif de réglage en rotation (20) étant conçus pour être entraînés électriquement.

2. Siège de véhicule (1) selon la revendication 1,
**caractérisé par le fait qu'**
une première extension en hauteur (10z) du dispositif de réglage en longueur (10) présente, dans la direction de la hauteur (1z) du siège de véhicule (1), une première limite supérieure (10z1) et une première limite inférieure (10z2), une seconde extension en hauteur (20z) du dispositif de réglage en rotation (20) présente, dans la direction de la hauteur (1z) du siège de véhicule (1), une seconde limite supérieure (20z1) et une seconde limite inférieure (20z2), la première limite supérieure (10z1) étant disposée au même niveau que ou au-dessus de la seconde limite supérieure (20z1) et/ou la première limite inférieure (10z2) étant disposée au même niveau que ou au-dessous de la seconde limite inférieure (20z2), en considérant à chaque fois la direction de la hauteur (1z) du siège de véhicule (1).

3. Siège de véhicule (1) selon l'une des revendications précédentes,
**caractérisé par le fait qu'**
une première extension en longueur (10x) du dispositif de réglage en longueur (10) présente, dans la direction de la longueur (1x) du siège de véhicule (1), une première limite avant (10x1) et une première limite arrière (10x2), une deuxième extension en longueur (20x) du dispositif de réglage en rotation (20) présente, dans la direction de la longueur (1x) du siège de véhicule (1), une seconde limite avant (20x1) et une seconde limite arrière (20x2), la première limite avant (10x1) étant disposée au même niveau que la seconde limite avant (20x1) ou en avant de celle-ci et/ou la première limite arrière (10x2) étant disposée au même niveau que la seconde limite arrière (20x2) ou en arrière de celle-ci, en considérant à chaque fois la direction de la longueur (1x) du siège de véhicule (1).

4. Siège de véhicule (1) selon l'une des revendications précédentes,
**caractérisé par le fait que**
le dispositif de réglage en longueur (10) présente un premier moteur électrique (16) pour le déplacement de la partie supérieure (4) par rapport à la partie inférieure (3) dans la direction de la longueur (1x) et/ou dans la direction de la largeur (1y) du siège de véhicule (1), et le dispositif de réglage en rotation (20) présente un second moteur électrique (26) pour la rotation de la partie supérieure (4) par rapport à la partie inférieure (3) autour de l'axe (A) dans la direction de la hauteur (1z) du siège de véhicule (1), un premier axe d'entraînement (161) du premier moteur électrique (16) et un second axe d'entraînement (261) du second moteur électrique (26) étant disposés parallèlement l'un à l'autre et/ou parallèlement à la direction de la longueur (1x) ou à la direction de la largeur (1y) du siège de véhicule (1).

5. Siège de véhicule (1) selon la revendication 4,
**caractérisé par le fait que**
le premier moteur électrique (16) est relié à une extrémité arrière (42) de la partie supérieure (4), et le second moteur électrique (26) est relié à une extrémité avant (41) de la partie supérieure (4).

6. Siège de véhicule (1) selon l'une des revendications précédentes,
**caractérisé par le fait que**
le dispositif de réglage en longueur (10) comporte deux unités de rails (30) disposées dans la direction de la longueur (1x) et/ou dans la direction de la largeur (1y) chacune avec un rail de guidage (31) et un rail de glissement (32), les rails de guidage (31) étant chacun reliés à la partie inférieure (3) et les rails de glissement (32) étant chacun reliés à la partie supérieure (4), le rail de glissement (32) étant déplaçable par rapport au rail de guidage respectif (31) au moyen du premier moteur électrique (16), lequel est disposé entre les deux unités de rails (30) et est relié de manière interactive à chacun des rails de glissement (32) par l'intermédiaire d'une unité de transmission (12) respective.

7. Siège de véhicule (1) selon la revendication 6,
**caractérisé par le fait que**
chacune des unités de transmission (12) comporte :
un arbre (121) aligné avec le premier axe d'entraînement (161) du premier moteur électrique (16) et relié fonctionnellement à celui-ci, une unité d'engrenage à vis sans fin (122), laquelle est reliée fonctionnellement sur un premier côté (1221) à l'arbre (121) et sur un second côté (1222) à un élément broche (123) disposé à l'intérieur de l'un des rails de glissement (32), l'élément broche (123) étant relié fonctionnellement à un élément d'entraînement (124) relié rigidement à l'un des rails de guidage (111).

8. Siège de véhicule (1) selon l'une des revendications précédentes,
**caractérisé par le fait que**
le dispositif de réglage en rotation (20) est conçu sans liaison à la partie inférieure (3).

9. Siège de véhicule (1) selon l'une des revendications précédentes,
**caractérisé par le fait que**
le dispositif de réglage en rotation (20) présente une unité d'engrenage primaire (27), laquelle est en liaison active mécanique, côté entraînement, avec le second moteur électrique (26) et, côté sortie, avec une unité d'engrenage secondaire (28), l'unité d'engrenage secondaire (28) étant disposée en liaison active mécanique avec une unité plateau tournant (29) du dispositif de réglage en rotation (20), reliée rigidement à la partie supérieure (4) et montée à rotation par rapport à la partie inférieure (3), l'unité de transmission secondaire (28) comportant un moyen de transmission de force (281) en forme de bande fermée sur elle-même, qui interagit avec une périphérie (291) de l'unité plateau tournant (29) et qui est transportable dans la direction de sa périphérie (2811) au moyen du second moteur électrique (26).
